# EUROPEAN PATENT SPECIFICATION

(11) **EP 3 022 939 B1**
(45) Date of publication and mention of the grant of the patent: **01.01.2020**
(21) Application number: 14744205.7
(22) Date of filing: 04.07.2014
(51) Int. Cl.: H04N 21/4363, H04N 5/775, H04N 9/79, G09G 5/00, H04N 5/85

(54) **INFORMATION PROCESSING APPARATUS, INFORMATION RECORDING MEDIUM, INFORMATION PROCESSING METHOD, AND PROGRAM**
INFORMATIONSVERARBEITUNGSVORRICHTUNG, INFORMATIONSAUFZEICHNUNGSMEDIUM, INFORMATIONSVERARBEITUNGSVERFAHREN UND PROGRAMM
APPAREIL, SUPPORT D'INFORMATIONS, PROCÉDÉ ET PROGRAMME DE TRAITEMENT D'INFORMATIONS

(30) Priority: 16.07.2013 JP 2013147423
(43) Date of publication of application: 25.05.2016
(73) Proprietor: Sony Corporation, Tokyo 108-0075 (JP)
(72) Inventor: UCHIMURA, Kouichi, Tokyo 108-0075 (JP); TAKAHASHI, Ryohei, Tokyo 108-0075 (JP)
(74) Representative: Witte, Weller & Partner Patentanwälte mbB
(86) International application number: PCT/JP2014/003559
(87) International publication number: WO 2015/008448

(56) References cited:
- EP-A2- 2 040 189
- EP-A2- 2 187 382
- WO-A1-2005/020237
- US-A1- 2007 031 113

## Description

### [Technical Field]

The present disclosure relates to an information processing apparatus, and an information processing method. In particular, the present disclosure relates to an information processing apparatus capable of performing display control of a high-resolution image,and an information processing method.

### [Background Art]

In a display device, such as a television, the resolution of an image that can be displayed is defined by the number of pixels of the display unit. In order to display a high-resolution image, it is necessary to increase the number of pixels of the display unit. Therefore, the development of a display device having an increased number of pixels has been actively performed in recent years.

For example, a high-definition television that is widespread currently has the number of pixels of "the number of horizontal pixels × the number of vertical pixels = 1920 × 1080", so that an HD (High Definition) image (HD content) can be displayed.

In addition, recently, a 4K television has been developed that has the number of pixels of 4 times that of the HD image, that is, the number of pixels of, for example, "the number of horizontal pixels × the number of vertical pixels = 4096 × 2160" so that an image according to the so-called 4K standard (4K format) can be displayed. Currently, the 4K television is in a supply stage.

Since the 4K television has a display unit of "the number of horizontal pixels × the number of vertical pixels = 4096 × 2160", it is possible to display an image (4K image (4K content)) with a resolution of 4 times that of the HD image.

However, since much of the content, such as a movie, is produced as HD content at present, the number of 4K content according to the 4K standard (4K format) is small. That is, at present, content with the following two kinds of different resolutions is mixed.

Content of (a) HD content with the number of pixels of "the number of horizontal pixels × the number of vertical pixels = 1920 × 1080" and (b) 4K content with the number of pixels of "the number of horizontal pixels × the number of vertical pixels = 4096 × 2160" is mixed.

In addition, the content with the number of pixels of "4096 × 2160" is called 4K content, while the HD content with the number of pixels of "1920 × 1080" is called 2K content.

This is because the number of horizontal pixels of the 4K content is 4096 ≈ 4K while the number of horizontal pixels of the HD content is 1920 ≈ 2K.

In addition, the number of pixels of the 4K content or the 4K television is not limited to "4096 × 2160", and various configurations with the number of horizontal pixels of about 4000, such as a configuration of "3840 × 2160", have been proposed. 4K content or 4K televisions described in this specification include content or televisions with the number of horizontal pixels of about 4000 pixels.

Examples of media (information recording media) that can store large-volume content, such as HD content (2K content) or 4K content, include disc type media such as a BD (Blu-ray (registered trademark) Disc), a flash memory, and the like.

When reproducing the content stored on media, such as the BD, a media reproduction apparatus, such as a BD player, is used. For example, a medium is reproduced by being mounted in a BD player connected to a television. In addition, content reproduction processing applying a BD player is described in PTL 1 (JP 2011-23070 A) and the like, for example.

US 2007/0031113 A1 discloses content media, such as a disc, having a portion with content in one format and a second portion with information in a second format.

EP 2 040 189 A2 relates to digital rights management, and discloses a method for distributing rights objects between a first device and a second device, the rights objects being used to authorize use of a content file.

EP 2 187 382 A2 discloses a video apparatus, which receives information regarding device and functions of the external apparatus from the external apparatus.

WO 2005/020237 A1 discloses a DVD player which is capable of automatically setting an optimal display environment for a digital TV by referring to screen ratio and resolution information received from the digital TV.

### [Citation List]

### [Patent Literature]

[PTL 1]
JP 2011-23070 A

### [Summary]

### [Technical Problem]

As described above, in the present situation, 2K (HD) content and 4K content are mixed, and a reproduction apparatus (player) or a display device (TV or the like) as a 4K compatible apparatus capable of reproducing or displaying the 4K content and a reproduction apparatus (player) or a display device (TV or the like) as a 4K non-compatible apparatus, which may not process the 4K content and can process only the 2K content, are mixed.

That is, this is the following situation.
(1) 4K content and 2K (HD) content are mixed in the content stored on media, such as a disc (BD).
(2) A 4K compatible reproduction apparatus (player), which can reproduce both 2K (HD) content and 4K content, and a 4K non-compatible reproduction apparatus (player), which can reproduce only 2K content, are mixed.
(3) A 4K compatible display device, which can display 4K content, and a 4K non-compatible display device, which may not display 4K content, are mixed in display devices, such as a television.

In such a situation, a reproduction apparatus, such as a BD player needs to perform control regarding whether to set an output to a display device to 4K or 2K by determining whether or not the reproduction content selected from the mounted media is 2K (HD) content or 4K content and further determining whether or not the connected display device, such as a television, is a 4K compatible display device that can display 4K content. In addition, when a 4K non-compatible display device that may not display 4K content is connected, sending a notification regarding the content display capability or the like to the viewer (user) is required.

However, at present, specific proposals for the optimal reproduction control based on the process of determining the content and a display device or for the user notification process have not been made.

The present disclosure has been made in view of the above problems, for example, and it is desirable to provide an information processing apparatus that performs optimal reproduction control of the content with different resolutions, an information recording medium, an information processing method, and a program.

### [Solution to Problem]

According to an aspect of the present disclosure, there is provided an information processing system as defined in claim 1.

According to a seventh aspect of the present disclosure, there is provided an information processing method executed by an information processing system, as defined in claim 4.

Other purposes, features, and advantages of the present disclosure will become apparent from the more detailed explanation based on the accompanying diagrams or the following embodiments of the present invention. In addition, the system in this specification is a logical set of a plurality of apparatuses, and the respective apparatuses are not necessarily located within the same housing.

### [Advantageous Effects of Invention]

According to the configuration of an embodiment of the present disclosure, there is provided an apparatus and method to perform accurately and efficiently a process for output control of the content recorded on an information recording medium or a process of outputting a display capability message or the like.

Specifically, for example, in the record content of the information recording medium, the content information A, which indicates whether an output at the start of reproduction that is first output to a display device is 4K content or 2K content, and the content information B, which indicates whether or not 4K content is included in the record content of the information recording medium, are read from the information recording medium. In addition, 4K display capability information indicating whether or not the display device is a 4K compatible display device is received from the display device and is stored in a register. By applying such content information A and B and the 4K display capability information, the content output control process and the display capability message output process can be performed accurately and efficiently.

In addition, the effects described in this specification are just for illustrative purposes and are not intended to limit the present disclosure, and there may be additional effects.

### [Brief Description of Drawings]

[fig.1]Fig. 1 is a diagram showing an example of the system configuration to perform the process of the present disclosure.
[fig.2]Fig. 2 is a diagram illustrating a content display processing mode according to the combination of content, an information processing apparatus (player), and a display device.
[fig.3]Fig. 3 is a sequence diagram illustrating the data stored on an information recording medium (BD).
[fig.4]Fig. 4 is a diagram illustrating the content information in an index table.
[fig.5]Fig. 5 is a diagram illustrating a process according to the combination of content information and a display device.
[fig.6]Fig. 6 is a diagram illustrating message display processing according to the combination of content information and a display device.
[fig.7]Fig. 7 is a diagram illustrating a PSR configured as a storage unit in an information processing apparatus (player).
[fig.8]Fig. 8 is a diagram illustrating an example in which 4K display capability information regarding a display device is recorded on a storage unit (PSR) in an information processing apparatus (player).
[fig.9]Fig. 9 is a diagram illustrating an example in which 4K display capability information regarding a display device is recorded on a storage unit (PSR) in an information processing apparatus (player).
[fig.10]Fig. 10 is a diagram showing a flowchart for explaining the processing sequence using the content information recorded on an information recording medium and 4K display capability information regarding a display device stored in a storage unit.
[fig.11]Fig. 11 is a diagram illustrating a process on 4K content for which down-conversion display processing is not allowed.
[fig.12]Fig. 12 is a diagram illustrating a process on 4K content for which down-conversion display processing is not allowed.
[fig.13]Fig. 13 is a diagram showing the flowchart for explaining the sequence of content display processing according to the information indicating whether or not down-conversion display processing is allowed.
[fig.14]Fig. 14 is a diagram illustrating an example of a message that is presented to a user (viewer) in the content display processing according to the information indicating whether or not down-conversion display processing is allowed.
[fig.15]Fig. 15 is a diagram illustrating an example of the configuration of the information processing apparatus (player).

### Description of Embodiments

Hereinafter, an information processing apparatus, an information recording medium, an information processing method, and a program of the present disclosure will be described in detail with reference to the accompanying drawings. In addition, explanation will be given according to the following items.
1. Overview of content reproduction processing
2. Configuration example of the content stored on an information recording medium
3. Recording and use processing of identification information regarding 4K content
4. Acquisition and storage processing and use processing of device information of a display device
   4-1. Example of storing 4K display capability information in a PSR 23
   4-2. Example of storing 4K display capability information in a PSR 25
5. Processing sequence executed by an information processing apparatus
6. Down-conversion display control processing corresponding to content
7. Configuration example of an information processing apparatus
8. Summary of the configuration of the present disclosure

### (1. Overview of content reproduction processing)

First, an overview of content reproduction processing will be described.

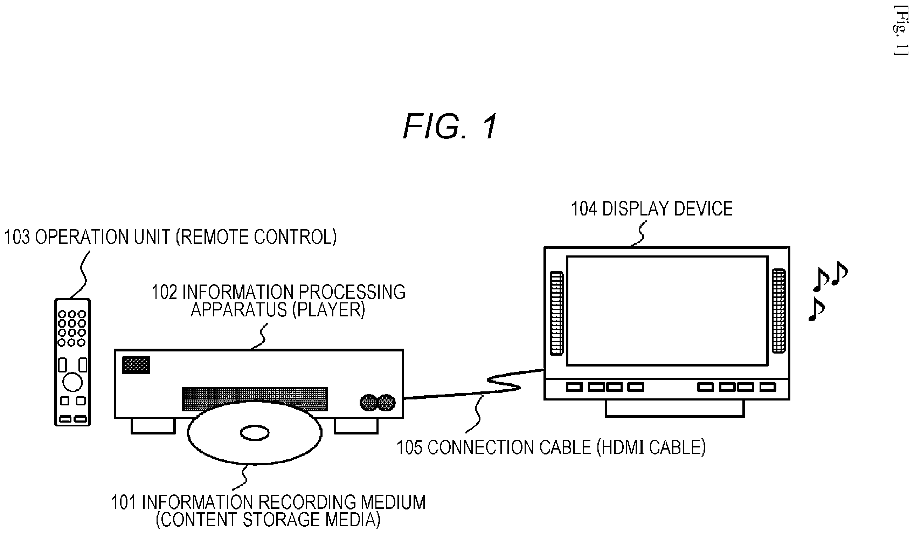

Fig. 1 is a diagram showing a configuration example of a content reproduction processing system to which the process of the present disclosure can be applied. Fig. 1 shows an information recording medium 101 that is a recording medium for storing the content to be reproduced, an information processing apparatus (reproduction apparatus) 102 in which the information recording medium 101 is mounted and which performs reproduction processing on the content stored on the information recording medium 101, and a display device 104 that displays the reproduction content read from the information recording medium 101 by the information processing apparatus (reproduction apparatus) 102.

In addition, an operation unit (remote control) 103 that outputs operation information to the information processing apparatus (reproduction apparatus) 102 and a connection cable 105 (for example, an HDMI (registered trademark) cable) to perform data transmission between the information processing apparatus (reproduction apparatus) 102 and the display device 104 are shown.

In the example shown in Fig. 1, an example is shown in which the information recording medium 101 that stores content is a BD (Blu-ray (registered trademark) Disc) and the information processing apparatus (reproduction apparatus) 102 is a BD player. However, these may be a combination of other recording media and reproduction apparatuses.

For example, it is possible to adopt a combination in which the information recording medium 101 that is a content storage medium is a flash memory and the information processing apparatus (reproduction apparatus) 102 is a memory reproduction apparatus that reads data from the flash memory.

Content to be reproduced is recorded on the information recording medium 101. The record content is the following content, for example.
(a) 2K content (HD content) with the number of pixels of "the number of horizontal pixels ´ the number of vertical pixels = 1920 ´ 1080"
(b) 4K content with the number of pixels of "the number of horizontal pixels ´ the number of vertical pixels = 4096 ´ 2160"

Any one of the content (a) and (b) described above is recorded on the information recording medium 101, or the content (a) and (b) described above are mixed and recorded on the information recording medium 101.

In an embodiment, 4K content or a 4K television with a configuration of "the number of horizontal pixels ´ the number of vertical pixels = 4096 ´ 2160" will be described as a representative example. However, various configurations in which the number of horizontal pixels is about 4000 have been proposed without the 4K content or the 4K television being limited to having the number of pixels of 4096 ´ 2160. The configuration of the present disclosure can be applied to 4K content and 4K televisions with these various pixel numbers.

The information processing apparatus 102 is a 4K compatible player that can reproduce both 2K content and 4K content or a 4K non-compatible player that can reproduce only 2K content and may not reproduce 4K content.

The display device 104 is either a 4K compatible display device that can display 4K content or a 4K non-compatible display device that can display only 2K content and may not display 4K content.

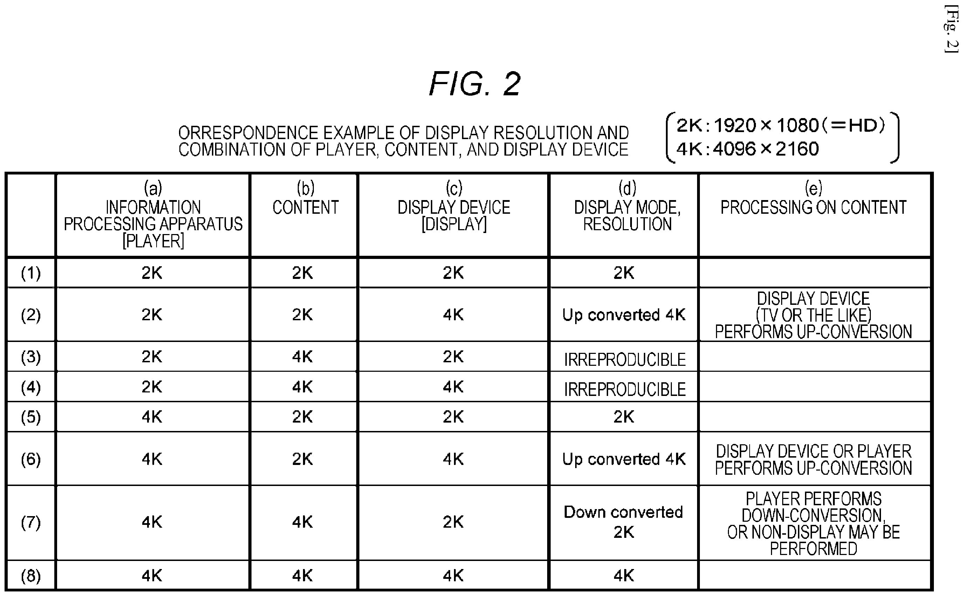

Thus, an example of processing according to the combination of (1) content stored on the information recording medium 101, (2) information processing apparatus (player) that performs content reproduction, (3) display device (display) that performs content display will be described with reference to Fig. 2.

Fig. 2 is a diagram illustrating a content display processing mode according to the combination of content, a reproduction apparatus, and a display device.

The table shown in Fig. 2 shows the following data from the left.
(a) Information processing apparatus [Player] 102 that performs content reproduction
(b) Contents stored on the information recording medium 101
(c) Display device [Display] 104 that performs content display
(d) Display mode and resolution of the content displayed on the display device 104
(e) Processing on the content

2K and 4K described in respective columns of (a) Information processing apparatus [Player] 102 have the following meanings.

2K: 4K non-compatible reproduction apparatus that can reproduce only 2K content and may not reproduce 4K content

4K: 4K compatible reproduction apparatus that can reproduce 2K content and 4K content

2K and 4K described in respective columns of (b) Content have the following meanings.

2K: Content to be reproduced that is recorded on the information recording medium 101 is 2K content

4K: Content to be reproduced that is recorded on the information recording medium 101 is 4K content

2K and 4K described in respective columns of (c) Display device [Display] 104 have the following meanings.

2K: 4K non-compatible display device that can display only 2K content and may not display 4K content

4K: 4K non-compatible display device that can display 2K content and 4K content

The combinations of (1) to (8) shown in Fig. 2 are combinations obtained by setting each of (a) Information processing apparatus [Player] 102, (b) Content, and (c) Display device [Display] 104 with 2K or 4K, and there are eight types (1) to (8) of combinations as shown in Fig. 2.

An image mode displayed on the display device 104 in eight types of combination settings shown in Fig. 2 is shown in (d).

2K means the display of a 2K image, and 4K means the display of a 4K image.

Up-converted 4K means a process of converting a 2K image into a 4K image and displaying the 4K image.

Down-converted 2K means a process of converting a 4K image into a 2K image and displaying the 2K image.

Entry (1) shown in Fig. 2 is an example of processing the 2K content when both the information processing apparatus (player) and the display device are 4K non-compatible apparatuses that can process only the 2K content. This is the same setting as in the related art, and the display content of the display device is 2K-displayed. That is, a process of displaying the 2K content (HD content) with the number of pixels of "the number of horizontal pixels ´ the number of vertical pixels = 1920 ´ 1080" is performed.

Entry (2) is an example of processing the 2K content when the information processing apparatus (player) is a 4K non-compatible apparatus that can process only the 2K content and the display device is a 4K compatible apparatus that can display a 4K image. In this case, the display content of the display device is a 4K image generated by converting (up-converting) the 2K content.

That is, although the original content is 2K content (HD content) with the number of pixels of "the number of horizontal pixels ´ the number of vertical pixels = 1920 ´ 1080", pseudo-4K content is generated by converting the 2K content and the display processing is performed.

In addition, up-conversion processing for converting the 2K image into the 4K image is performed by either the information processing apparatus (player) 102 or the display device 104.

Entries (3) and (4) are examples of processing the 4K content when the information processing apparatus (player) is set as a 4K non-compatible apparatus that can process only the 2K content and the display device is set as a 4K compatible apparatus or a 4K non-compatible apparatus. In this case, the display of 4K content is not performed by the display device.

The process of (3) corresponds to a process of reproducing and displaying the 4K content recorded on the media using conventional apparatuses, that is, a combination of a 4K non-compatible information processing apparatus (player) and a 4K non-compatible display device. In this case, since reproduction processing may not be performed, content display is not performed either.

In the process of (4), the display device is a 4K compatible apparatus, and the information processing apparatus (player) is a 4K non-compatible apparatus. Accordingly, reading and reproduction of 4K content may not be performed. As a result, reproduction and display are not performed.

Entry (5) is an example of processing the 2K content when the information processing apparatus (player) is set as a 4K compatible apparatus and the display device is set as a 4K non-compatible apparatus. In this case, the display content of the display device is 2K content.

Entry (6) is an example of processing the 2K content when the information processing apparatus (player) is set as a 4K compatible apparatus and the display device is also set as a 4K compatible apparatus. In this case, the display content of the display device is a 4K image generated by converting (up-converting) the 2K content. That is, although the original content is 2K content (HD content) with the number of pixels of "the number of horizontal pixels ´ the number of vertical pixels = 1920 ´ 1080", pseudo-4K content is generated by converting the 2K content and the display processing is performed.

In addition, up-conversion processing for converting the 2K image into the 4K image is performed by either the information processing apparatus (player) 102 or the display device 104.

Entry (7) is an example of processing the 4K content when the information processing apparatus (player) is set as a 4K compatible apparatus and the display device is set as a 4K non-compatible apparatus. In this case, the display content of the display device is a 2K image generated by converting (down-converting) the 4K content.

That is, although the original content is 4K content with the number of pixels of "the number of horizontal pixels ´ the number of vertical pixels = 4096 ´ 2160", 2K content is generated by converting the 4K content and the display processing is performed.

Down-conversion processing for converting the 4K image into the 2K image is performed by either the information processing apparatus (player) 102 or the display device 104.

In this example, processing for not displaying the content may be performed instead of performing down-conversion.

Entry (8) is an example of processing the 4K content when the information processing apparatus is set as a 4K compatible apparatus and the display device is also set as a 4K compatible apparatus. In this case, the display content of the display device is 4K content.

As shown in Fig. 2, it is necessary to perform different processing according to the types of (a) Information processing apparatus that reproduces the content stored on the information recording medium, (b) Content to be reproduced that is stored on the information recording medium, and (c) Display device that performs content display processing.

The control of these processes is performed by the information processing apparatus (player) 102 that reproduces the content, for example. In this case, in the information processing apparatus 102, a process of identifying whether the content to be reproduced that is recorded on the information recording medium 101 is 2K content or 4K content is required. In addition, it is also required to identify whether the display device 104 connected to the information processing apparatus 102 is a 4K compatible apparatus or a 4K non-compatible apparatus.

Depending on the identification results, the information processing apparatus performs output control of the content according to (d) Display mode shown in Fig. 2.

### (2. Configuration example of the content stored on an information recording medium)

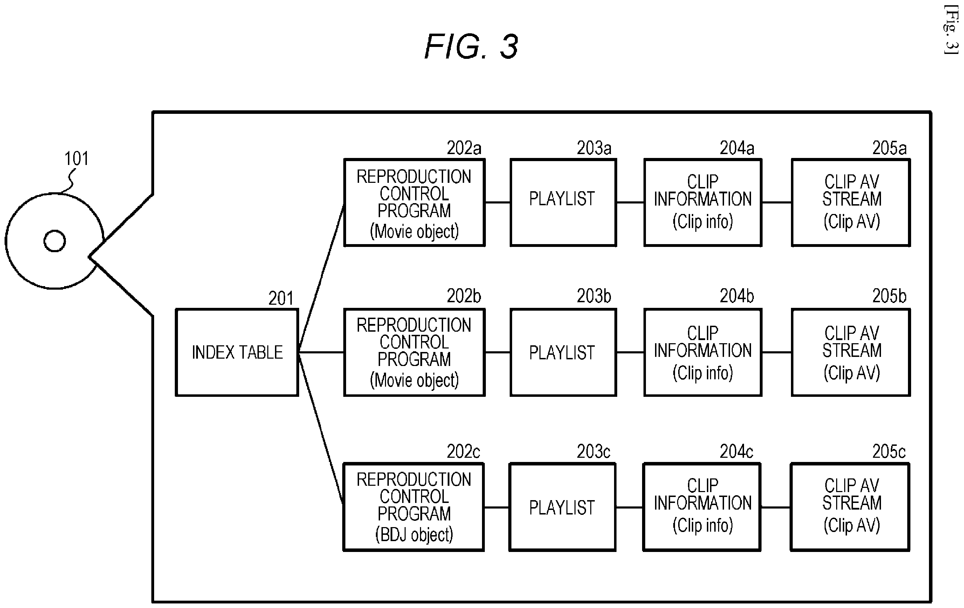

Next, a data configuration example of the content stored on the information recording medium 101 will be described with reference to Fig. 3.

The example shown in Fig. 3 is a diagram showing an example of the content recording configuration according to the data recording format for the BD (Blu-Ray (registered trademark) Disc).

As shown in Fig. 3, the following various kinds of data are recorded on the information recording medium 101. Index table 201
Reproduction control program (Movie object/BDJ object) 202
PlayList 203
Clip info 204
Clip AV stream (Clip AV) 205

Image data or sound data to be reproduced is stored in the clip AV stream 205.

The index table 201, the reproduction control program 202, the playlist 203, and the clip info 204 are management data files in which management information applied to the reproduction of the data stored in the clip AV stream 205 is stored.

Hereinafter, each of the files will be described briefly.

The index table 201 is a file in which management information regarding the record data of the entire media is stored. For example, an index of each title of the reproduction content unit (correspondence relationship between a title and a reproduction control program) is recorded. Content to be reproduced can be selected by selecting the reproduction content from the titles recorded in the index table 201.

The reproduction control program 202 is a file in which the management information of the playlist 203 is stored, for example. A plurality of programs for performing reproduction processing using various playlists are included. For example, a program applied to AV stream reproduction processing, a program applied to menu display processing, and the like are included.

In addition, Fig. 3 shows two types of programs of Movie Objects 202a and b, and a BDJ Object 202c as the reproduction control program 202. This is due to a difference relevant to whether the content to be controlled is content, such as a movie, or a Java (registered trademark) file.

The playlist 203 is a reproduction list including one or more play items. The play item is reproduction section designation information including the reproduction start point (IN point) and the reproduction end point (OUT point) for a clip. The reproduction sequence of each reproduction section can be designated by arranging a plurality of play items in the play list in on a temporal axis.

The clip info 204 is set corresponding to the clip AV stream 205. The clip info 204 is a file including information regarding the stream that is necessary when reproducing the actual stream.

The clip AV stream 205 is a file in which the stream recorded, for example, in the MPEG2-TS format is stored. Image data displayed on the display device is stored in this file.

In the example shown in Fig. 3, a configuration is shown in which the following three data file series are connected to one index table 201.
(a) Reproduction control program 202a to clip AV stream 205a
(b) Reproduction control program 202b to clip AV stream 205b
(c) Reproduction control program 202c to clip AV stream 205c
Each of these series (a) to (c) corresponds to the content corresponding to one certain title and the management information file.

For example,
(a) Reproduction control program 202a to clip AV stream 205a corresponds to one certain movie content and the management information file.
(b) Reproduction control program 202b to clip AV stream 205b corresponds to different content and the management information file.
(c) Reproduction control program 202c to clip AV stream 205c corresponds to further different content and the management information file.

Title information and the like corresponding to the respective data series of (a) to (c) are recorded in the index table 201, so that the user can select one of the titles recorded in the index table to selectively reproduce the content corresponding to any one of the data series of (a) to (c).

In addition to such content selection information, overall management information of the content recorded on the information recording medium, such as an image format and a frame rate, is recorded in the index table 201.

The information processing apparatus 102 in which the information recording medium 101 is mounted can first acquire the information recorded in the index table 201 and perform various settings required for content reproduction.

### (3. Recording and use processing of identification information regarding 4K content)

The information recording medium 101 that stores the data described with reference to Fig. 3 is mounted in the information processing apparatus (player) 102 shown in Fig. 1, and the data is read by the information processing apparatus (player) 102. As a result, content reproduction processing is performed.

The information processing apparatus 102 of the present disclosure reads 4K-related content information regarding the content recorded on the information recording medium 101 from the information recording medium 101, and performs a process according to the read content information.

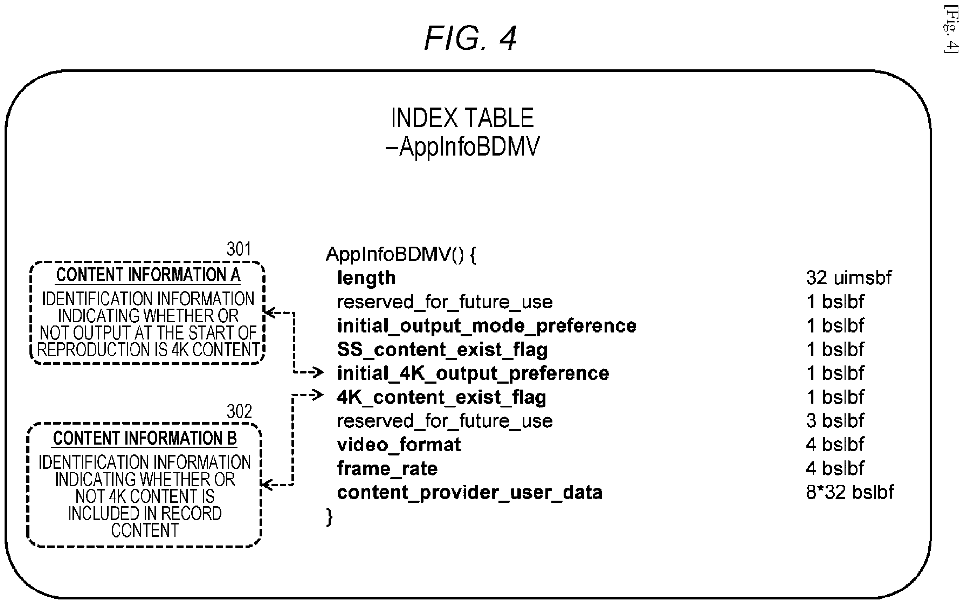

Fig. 4 is a syntax diagram showing a part of the index table 201 recorded on the information recording medium 101 described with reference to Fig. 3.

As described above, management information regarding the content recorded on the information recording medium 101 is recorded in the index table 201.

For example, the management information is a title corresponding to the content, image format information, and frame rate information.

In the configuration of one embodiment of the present disclosure, recording in this index table is performed so as to include content information indicating the 4K-related information regarding the record content of the information recording medium. The information processing apparatus (player) 102 reads the content information, and performs various kinds of initial processing. There are content information A 301 and content information B 302 in the index table shown in Fig. 4.

Hereinafter, the two types of the content information A 301 and the content information B 302 shown in Fig. 4 will be described.

The content information A 301 is [initial_4K_output_preference].

This content information A [initial_4K_output_preference] is information indicating whether or not the image data, which is first read from the information recording medium 101 and is output to the display device 104, is 4K content.

For example, when the image data that is first read from the information recording medium 101 and is output to the display device 104 is 4K content, content information A [initial_4K_output_preference] = 1 is set.

On the other hand, when the image data that is first read from the information recording medium 101 and is output to the display device 104 is 2K content, content information A [initial_4K_output_preference] = 0 is set.

For example, the image data that is read from the information recording medium 101 and is output to the display device 104 is the content, such as a movie, or various kinds of content according to information recording media, such as other opening screens, menu information, and advertising content.

This content information A [initial_4K_output_preference] is identification information indicating whether or not the first output image data is 4K content.

The information processing apparatus (player) 102, in which the information recording medium 101 is mounted and which reproduces the content stored on the information recording medium 101, can immediately determine whether the first image output to the display device 104 is 4K or 2K (HD) with reference to the content information A [initial_4K_output_preference].

According to the determination result based on the content information A, the information processing apparatus (player) 102 can quickly set the format of the data output from the information processing apparatus (player) 102 to the display device 104 to the 4K format or the 2K (HD) format.

As a result, it is possible to shorten the time required until the first image is displayed on the display device 104 from the mounting of the information recording medium 101 or from the input of the reproduction start instruction from the user, for example.

In addition, the processing sequence of the information processing apparatus (player) 102 will be further described later.

Next, the content information B 302 that is another piece of content information shown in Fig. 4 will be described.

The content information B 302 is [4K_content_exist_flag].

The content information B [4K_content_exist_flag] is information indicating whether or not 4K content is included in all content recorded on the information recording medium 101.

For example, when 4K content is included in all content recorded on the information recording medium 101, content information B [4K_content_exist_flag] = 1 is set.

On the other hand, when 4K content is not included in all content recorded on the information recording medium 101, content information B [4K_content_exist_flag] = 0 is set.

The information processing apparatus (player) 102, in which the information recording medium 101 is mounted and which reproduces the content stored on the information recording medium 101, can immediately determine whether or not 4K content is included in the information recording medium 101 with reference to the content information B [4K_content_exist_flag].

As will be described in detail later, the information processing apparatus (player) 102 acquires display device information indicating whether or not the display device 104 connected to the information processing apparatus (player) 102 is a 4K compatible display device, which can display 4K content, in addition to the content information B.

That is, the information processing apparatus (player) 102 determines whether or not 4K content is included in the content stored on the information recording medium 101 based on the content information B, and further determines whether or not the display device 104 is a 4K compatible display device.

Based on the determination information, the information processing apparatus (player) 102 outputs a message showing the display mode of the content or the like to the display device 104. That is, a process of notifying the user (viewer) of the details of the content display mode, which is determined according to the content stored on the information recording medium 101 and the performance of the display device 104, is performed. A specific example of the message display processing will be described in detail.

As described above, the information processing apparatus (player) 102 that performs content reproduction acquires identification information of the content information A [initial_4K_output_preference] and the content information B [4K_content_exist_flag] from the index table of the information recording medium 101.

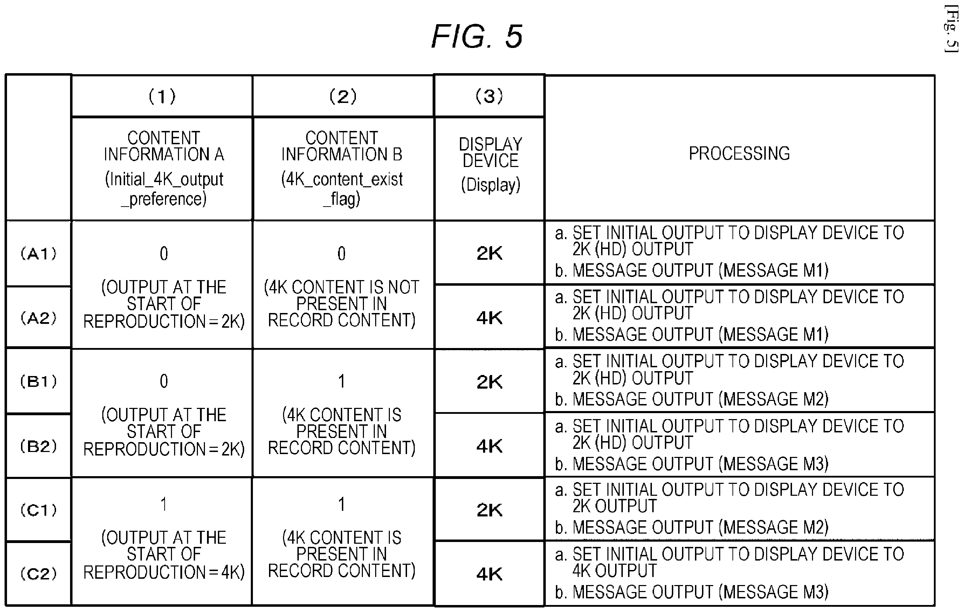

In addition, the information processing apparatus (player) 102 can determine whether or not the display device 104 is a 4K compatible display device and perform various kinds of matching according to each combination. Such combination and processing will be described with reference to Fig. 5.

Fig. 5 shows a processing example corresponding to the combination of the respective patterns of (1) of (1) Whether the content information A [initial_4K_output_preference] (output at the start of reproduction = 4K) is 0 (2K) or 1 (4K), (2) Whether the content information B [4K_content_exist_flag] is 0 (4K content is not included) or 1 (4K is included) (whether or not 4K content is included), and (3) Whether the display device is a 4K compatible display device (4K) or a 4K non-compatible display device (2K).

In the case of content information A = 1 (output at the start of reproduction = 4K), content information B = 1 (4K content is included) is necessarily satisfied. Accordingly, since there is no case of content information B = 0, the number of combination patterns of (1) to (3) is six (A1 to C2) shown in Fig. 5.

A process performed by the information processing apparatus (player) 102 in each of the combination patterns (A1) to (C2) will be described.

### (Pattern A1)

Content information A = 0 (initial output = 2K)
Content information B = 0 (4K content is not included)
Display device = 2K (4K non-compatible)

In this combination, the content read from the information recording medium is all 2K, and the display device is a 4K non-compatible display device that may not display a 4K image. Accordingly, only the 2K image is output.

In the pattern A1, the content read from the information recording medium is all 2K, and only the 2K image is output to the 4K non-compatible display device.

In this case, the information processing apparatus (player) 102 performs the following process as shown in Fig. 5.
a. An initial output to the display device is set to 2K output (HD)
b. Message output (message M1)

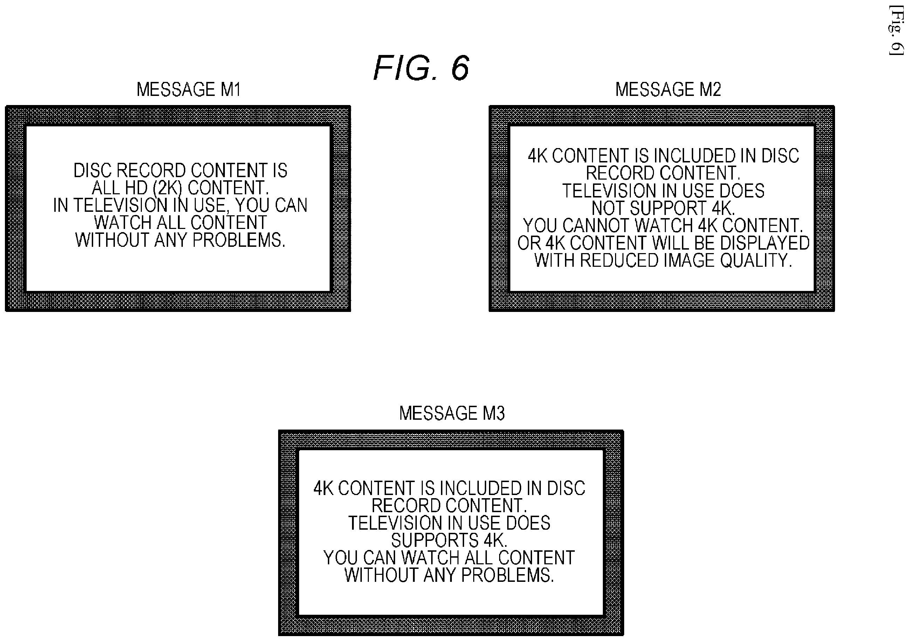

Fig. 6 shows an example of a message M1. As shown in Fig. 6, the message M1 is the following message.

"The content recorded on the disc is all HD (2K) content. In the television in use, you can watch all content without any problems".

In addition, the message shown in Fig. 6 is an example, and other message configurations may be used. However, a setting is preferable that includes information indicating whether or not 4K content is included in the content of the information recording medium and information indicating whether or not it is possible to watch all content recorded on the information recording medium. In addition, information indicating whether or not the television supports the 4K may be included.

### (Pattern A2)

Content information A = 0 (initial output = 2K)
Content information B = 0 (4K content is not included)
Display device = 4K (4K compatible)

In this combination, the content read from the information recording medium is all 2K, and the display device is a 4K compatible display device that can display a 4K image.

The content read from the information recording medium is all 2K, and only the 2K image is output to the 4K compatible display device.

In this case, the information processing apparatus (player) 102 performs the following process as shown in Fig. 5.
a. An initial output to the display device is set to 2K output (HD)
b. Message output (message M1)

The message M1 is the same as the message in the case of the pattern (A1), and is the following message as shown in Fig. 6.

"The content recorded on the disc is all HD (2K) content. In the television in use, you can watch all content without any problems".

### (Pattern B1)

Content information A = 0 (initial output = 2K)
Content information B = 1 (4K content is included)
Display device = 2K (4K non-compatible)

In this combination, the content that is initially read from the information recording medium is 2K, but 4K content is included in the content recorded on the information recording medium.

The display device is a 4K non-compatible device that may not display a 4K image.

In this case, the information processing apparatus (player) 102 performs the following process as shown in Fig. 5.
a. An initial output to the display device is set to 2K output (HD)
b. Message output (message M2)

As shown in Fig. 6, the message M2 is the following message.

"4K content is included in the content recorded on the disc. The television in use does not support 4K. You cannot watch 4K content. Or the 4K content will be displayed with the reduced image quality".

In the pattern B1, since the display device is a 4K non-compatible display device, the 4K content stored on the information recording medium may not be displayed on the display device as 4K content.

Therefore, the 4K content is not displayed, or the 4K content is displayed after being converted (down-converted) into 2K content.

When the information processing apparatus or the display device has a down-conversion function, any of the information processing apparatus and the display device can perform down-conversion processing to display the 4K content as a 2K image. However, when neither the information processing apparatus nor the display device has a down-conversion function, it is not possible to perform display.

### (Pattern B2)

Content information A = 0 (initial output = 2K)
Content information B = 1 (4K content is included)
Display device = 4K (4K compatible)

In this combination, the content that is initially read from the information recording medium is 2K, but 4K content is included in the content recorded on the information recording medium.

The display device is a 4K compatible device that can display a 4K image.

In this case, the information processing apparatus (player) 102 performs the following process as shown in Fig. 5.
a. An initial output to the display device is set to 2K output (HD)
b. Message output (message M3)

As shown in Fig. 6, the message M3 is the following message.

"4K content is included in the content recorded on the disc. The television in use supports 4K. You can watch all content without any problems".

In the pattern B2, since the display device is a 4K compatible display device, the 4K content stored on the information recording medium can be displayed on the display device as 4K content.

### (Pattern C1)

Content information A = 1 (initial output = 4K)
Content information B = 1 (4K content is included)
Display device = 2K (4K non-compatible)

In this combination, the content that is initially read from the information recording medium is 4K, and 4K content is included in the content recorded on the information recording medium.

The display device is a 4K non-compatible device that may not display a 4K image.

In this case, the information processing apparatus (player) 102 performs the following process as shown in Fig. 5.
a. An initial output to the display device is set to 2K output
b. Message output (message M2)

As shown in Fig. 6, the message M2 is the following message.

"4K content is included in the content recorded on the disc. The television in use does not support 4K. You cannot watch 4K content. Or the 4K content will be displayed with the reduced image quality".

In the pattern C1, similarly to the pattern B1 described above, since the display device is a 4K non-compatible display device, the 4K content stored on the information recording medium may not be displayed on the display device as 4K content.

Therefore, the 4K content is displayed after being converted (down-converted) into 2K content.

When the information processing apparatus or the display device has a down-conversion function, any of the information processing apparatus and the display device can perform down-conversion processing to display the 4K content as a 2K image. However, when neither the information processing apparatus nor the display device has a down-conversion function, display is not possible.

In the example shown in Fig. 5, an example of the process when the information processing apparatus (player) has a down-conversion function is shown.

### (Pattern C2)

Content information A = 1 (initial output = 4K)
Content information B = 1 (4K content is included)
Display device = 4K (4K compatible)

In this combination, the content that is initially read from the information recording medium is 4K, and 4K content is included in the content recorded on the information recording medium.

The display device is a 4K compatible device that can display a 4K image.

In this case, the information processing apparatus (player) 102 performs the following process as shown in Fig. 5.
a. An initial output to the display device is set to 4K output
b. Message output (message M3)

As shown in Fig. 6, the message M3 is the following message.

"4K content is included in the content recorded on the disc. The television in use supports 4K. You can watch all content without any problems".

In the pattern C2, since the display device is a 4K compatible display device, the 4K content stored on the information recording medium can be displayed on the display device as 4K content.

In the embodiment described with reference to Figs. 5 and 6, explanation has been given on the assumption that a message for a user (viewer) is displayed in all of the six patterns of (A1) to (C2) shown in Fig. 5. However, a setting for performing message display only in some cases is also possible.

For example, a setting is also possible in which a message (messages M1 and M3) is not displayed when viewing is possible without any problems and only a message (message M2) is displayed when there is a possibility of a problem in the viewing.

### (4. Acquisition and storage processing and use processing of device information of a display device)

As described with reference to Fig. 5, the information processing apparatus (player) 102 of the present disclosure acquires device information indicating whether or not the display device 104 connected to the information processing apparatus (player) 102 is a 4K compatible display device, and performs a process using the device information.

As shown in Fig. 1, the information processing apparatus (player) 102 is connected to the display device 104 through the connection cable 105, such as an HDMI (registered trademark) cable.

The information processing apparatus (player) 102 receives device information from the display device 104 through the connection cable 105, and determines whether or not the display device 104 is a 4K compatible display device.

Specifically, the information processing apparatus (player) 102 receives HDMI (registered trademark) EDID (Extended Display Identification Data) as display device information from the display device 104 through the HDMI (registered trademark) cable. The information processing apparatus (player) 102 acquires, from the received information, information indicating whether or not the display device 104 is a 4K compatible device that can display a 4K image, that is, 4K display capability information (4K Display Capability).

In addition, as a method of acquiring the display device information indicating whether or not the display device is a 4K compatible device, other methods may be applied without being limited to the above-described HDMI (registered trademark) EDID.

The information processing apparatus (player) 102 stores the 4K display capability information (4K Display Capability), which has been received from the display device 104, in a storage unit of the information processing apparatus 102.

For example, as 1-bit information, 4K display capability information indicating whether or not the display device 104 is a 4K compatible display device is recorded by the following settings.
Bit 0: display device is a 4K non-compatible device
Bit 1: display device is a 4K compatible device
Such data is stored in the storage unit.

In addition, when it is not possible to acquire the 4K display capability information (4K Display Capability) from the display device 104, the information processing apparatus (player) 102 determines that the display device 104 is a 4K non-compatible device, and sets a bit 0.

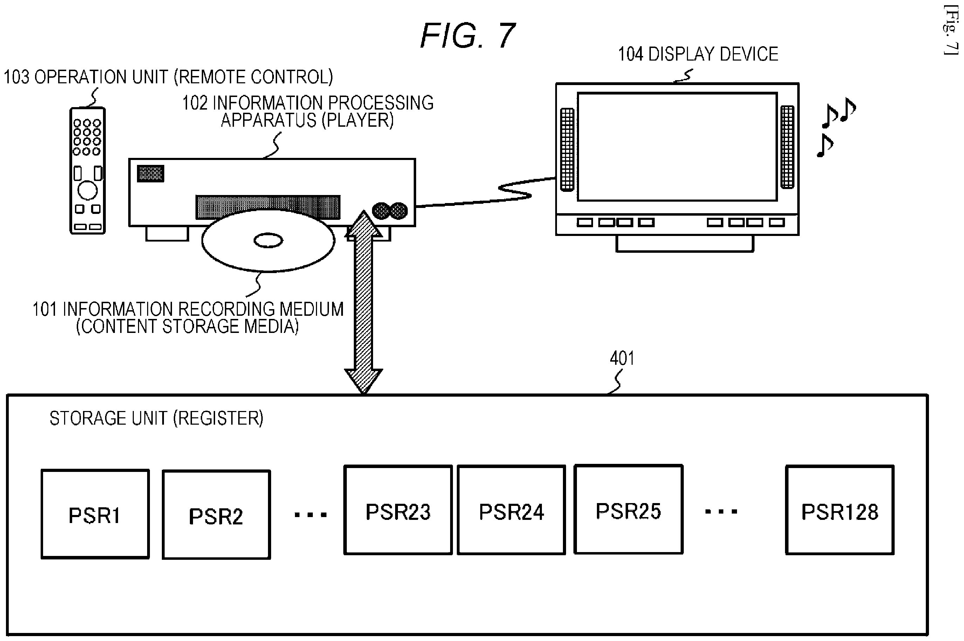

An example of a storage unit that stores a bit value indicating the 4K display capability information (4K Display Capability) will be described with reference to Fig. 7 and the subsequent drawings.

The example shown in Fig. 7 is an example in which a PSR is used as a storage unit for storing a bit value.

A storage unit (register) 401 is a PSR, that is, a player setting register, or a register group configured to include playback status registers.

Each PSR that forms the storage unit (register) 401 has a storage area of 8-bit data, for example. As shown in Fig. 7, the information processing apparatus 102 has a number of PSRs. In the example shown in Fig. 7, an example of the storage unit (register) 401 configured to include 128 PSRs of PSR 1 to PSR 128 is shown.

Various parameters required for application to the content stored on the information recording medium are recorded in the respective PSRs. That is, these are a content reproduction control parameter, output control information for the display device 104, and the like.

A storage parameter for each PSR is specified in each reproduction program. However, all record fields of PSR 1 to PSR 128 are not used. There is an unused PSR that has not been used at all or a PSR in which some bit areas are used and some bit areas are unused areas (reserved areas).

A bit value indicating the 4K display capability information (4K Display Capability), which indicates whether or not the display device that performs content display is a 4K compatible display device, is stored in the unused PSR or in some unused bit areas of the PSR.

Hereinafter, two examples will be described as bit value storage examples.

### (4-1. Example of storing 4K display capability information in a PSR 23)

First, an example of storing a bit value indicating the 4K display capability information (4K Display Capability), which indicates whether or not the display device is a 4K compatible display device, using a PSR 23 that is one PSR in a PSR group, which is the storage unit (register) 401 of the information processing apparatus (player) 102, will be described.

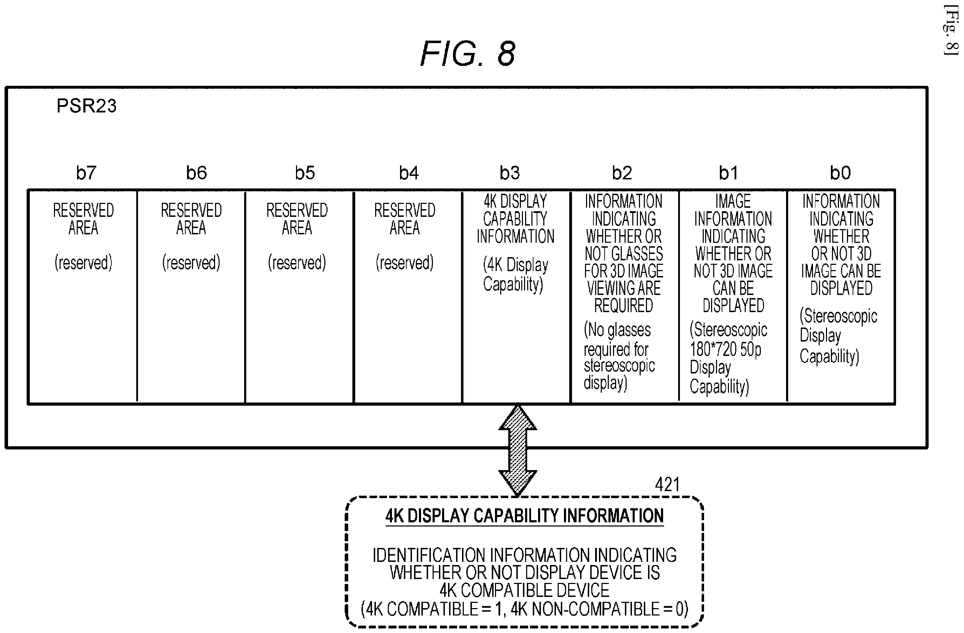

Fig. 8 shows a data storage example of the PSR 23. The PSR 23 has data recording areas of 8 bits, and only the recording areas of 3 bits of b0 to b2 among them are used as recording areas of reproduction control information regarding the content reproduction using a 3D television.

The bit value recording areas of b3 to b7 are unused (reserved) areas, and one bit recording area (b3) of the bit value recording areas of b3 to b7 is set as a storage area of the bit value indicating the 4K display capability information (4K Display Capability).

As shown in Fig. 8, using the 1-bit recording area (b3) of the register PSR 23, 4K display capability information (4K Display Capability) 421 is recorded therein.

Either bit value = 1 (when the display device is a 4K compatible display device) or bit value = 0 (when the display device is a 4K non-compatible display device) is stored.

As described above, for example, the information processing apparatus (player) 102 analyzes the display device information (HDMI (registered trademark) EDID) received from the display device 104, acquires information indicating whether or not the display device is a 4K compatible display device, and stores the bit value (0 or 1) at the predetermined position (b3) of the PSR 23 according to the acquired information.

When performing the process described above with reference to Fig. 5, that is, when setting the initial output of the display device or outputting a message, the information processing apparatus (player) 102 determines a process to be performed by determining whether or not the display device 104 that performs content output is a 4K compatible display device with reference to the bit value of the 1-bit recording area (b3) of the PSR 23.

### (4-2. Example of storing 4K display capability information in a PSR 25)

Next, an example of storing a bit value indicating the 4K display capability information (4K Display Capability), which indicates whether or not the display device is a 4K compatible display device, using a PSR 25 that is one PSR in a PSR group, which is the storage unit (register) 401 of the information processing apparatus (player) 102, will be described.

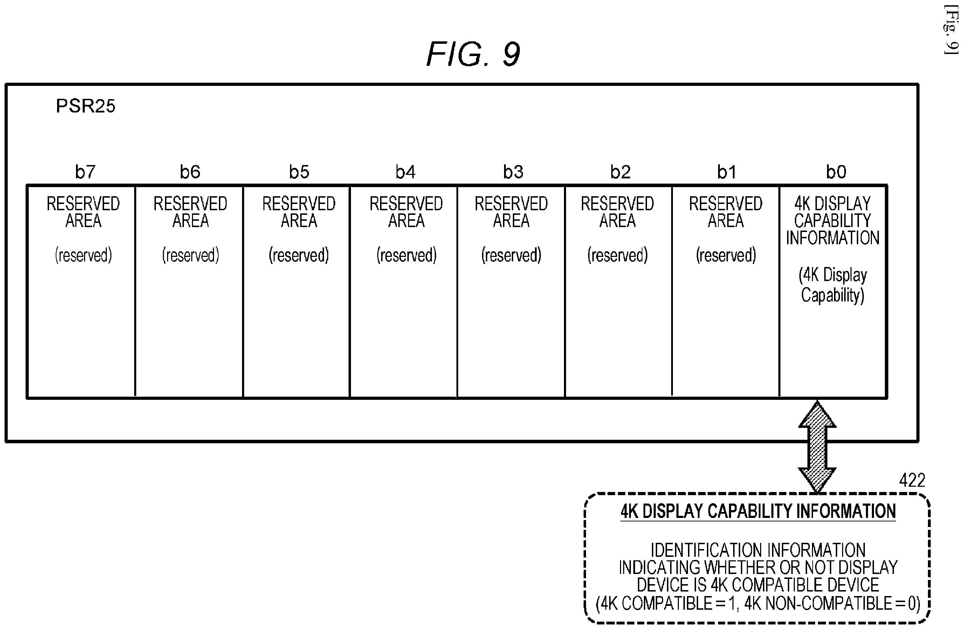

Fig. 9 shows a data storage example of the PSR 25. The PSR 25 has data recording areas of 8 bits. The bit value recording areas of all areas b0 to b7 of the PSR 25 are unused (reserved) areas. Among these recording areas, one bit recording area (b0) is set as a storage area of the bit value indicating the 4K display capability information (4K Display Capability).

As shown in Fig. 9, using the 1-bit recording area (b0) of the register PSR 25, 4K display capability information (4K Display Capability) 422 is recorded therein.

Either bit value = 1 (when the display device is a 4K compatible display device) or bit value = 0 (when the display device is a 4K non-compatible display device) is stored.

As described above, for example, the information processing apparatus (player) 102 analyzes the display device information (HDMI (registered trademark) EDID) received from the display device 104, acquires information indicating whether or not the display device is a 4K compatible display device, and stores the bit value (0 or 1) at the predetermined position (b0) of the PSR 25 according to the acquired information.

When performing the process described above with reference to Fig. 5, that is, when setting the initial output of the display device or outputting a message, the information processing apparatus (player) 102 determines whether or not the display device 104 that performs content output is a 4K compatible display device with reference to the bit value of the 1-bit recording area (b0) of the PSR 25, and determines a process to be performed according to the determination result.

### (5. Processing sequence executed by an information processing apparatus)

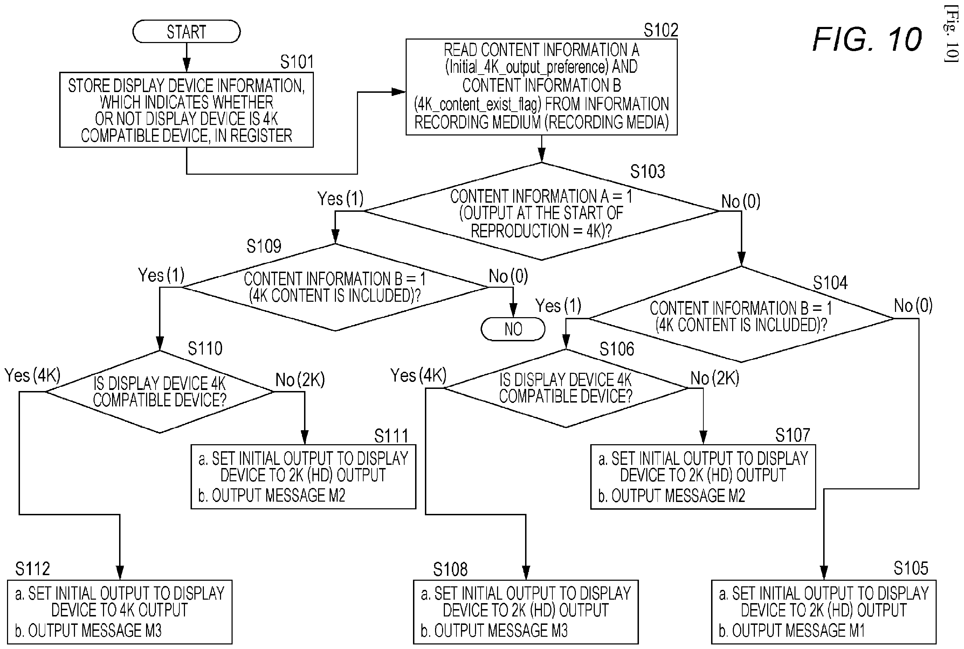

Next, the sequence of processing that the information processing apparatus (player) 102, in which the information recording medium 101 is mounted and which reproduces the content stored on the information recording medium 101, performs as initial processing before the start of content reproduction will be described with reference to the flowchart shown in Fig. 10.

The flowchart shown in Fig. 10 is executed by a data processing unit of the information processing apparatus 102 in which the information recording medium 101 that stores content is mounted. A program that records the processing sequence according to the flow shown in Fig. 10 is stored in a memory of the information processing apparatus 102 or on an information recording medium that stores content. According to the program read from the memory or the information recording medium 101, the information processing apparatus 102 performs a process according to the flowchart shown in Fig. 10.

First, in step S101, the information processing apparatus acquires information indicating whether or not the display device, which displays the reproduction content from the information recording medium, is a 4K compatible device that can display 4K content, and stores the acquired information in a storage unit (register).

As described above, for example, HDMI (registered trademark) EDID is acquired from a display device connected through the HDMI (registered trademark) cable, and 4K display capability information included in the acquired information is stored in a storage unit. The storage unit is one of the PSRs described with reference to Figs. 8 and 9, for example.

The following bit value is stored in the storage unit of the information processing apparatus (player).

Either bit value: 1 (when the display device is a 4K compatible display device) or bit value: 0 (when the display device is a 4K non-compatible display device) is stored. In addition, when display device information is not acquired from the display device, it is determined that the display device is a 4K non-compatible display device, and the bit value 0 is stored.

Then, in step S102, the information processing apparatus (player) acquires the following information from the information recording medium mounted in the information processing apparatus (player).
Content information A [Initial_4K_output_preference]
Content information B [4K_content_exist_flag]
These are information acquired from the content management information recorded on the information recording medium that stores content, as described above with reference to Fig. 4.

Specifically, such content information indicates the following information.

The content information A [initial_4K_output_preference] is information indicating whether the output at the start of reproduction is 4K content or 2K content.

This is the content information indicating "output at the start of reproduction = 2K content" in the case of content information A = 0 and "output at the start of reproduction = 4K content" in the case of content information A = 1.

The content information B [4K_content_exist_flag] is information indicating whether or not 4K content is included in the content stored on the information recording medium.

This is the content information indicating "4K content is not included" in the case of content information B = 0 and "4K content is included" in the case of content information B = 1.

In step S102, the information processing apparatus acquires these two pieces of content information A and B from the information recording medium.

Then, in step S103, the information processing apparatus determines a setting of the content information A [initial_4K_output_preference] acquired from the information recording medium. That is, the information processing apparatus determines whether the setting of the content information A [initial_4K_output_preference] is "content information A = 0: output at the start of reproduction = 2K content" or "content information A = 1: output at the start of reproduction = 4K content".

When "content information A = 0: output at the start of reproduction = 2K content" is determined in step S103, the process proceeds to step S104.

On the other hand, when "content information A = 1: output at the start of reproduction = 4K content" is determined, the process proceeds to step S109.

When "content information A = 0: output at the start of reproduction = 2K content" is determined in step S103 and the process proceeds to step S104, the information processing apparatus determines a setting of the content information B [4K_content_exist_flag] acquired from the information recording medium. That is, the information processing apparatus determines whether the setting of the content information B [4K_content_exist_flag] is "content information B = 0: information recording medium does not include 4K content" or "content information B = 1: information recording medium includes 4K content".

When "content information B = 0: information recording medium does not include 4K content" is determined in step S104, the process proceeds to step S105.

On the other hand, when "content information B = 1: information recording medium includes 4K content" is determined, the process proceeds to step S106.

When "content information B = 0: information recording medium does not include 4K content" is determined in step S104, the process proceeds to step S105 to perform the following process.
a. An initial output to the display device is set to 2K output (HD).
b. Message M1 is output.

This process of step S105 corresponds to the process of (A1) and (A2) described above with reference to Fig. 5. That is, this is a process corresponding to the following settings.
Content information A = 0 (output at the start of reproduction = 2K)
Content information B = 0 (4K content is not included in the information recording medium)
Display device = 4K compatible or 4K non-compatible

In the case of these settings, that is, in the case of (A1) and (A2) shown in Fig. 5, the following process shown in step S105 is performed.
a. An initial output to the display device is set to 2K output (HD).
b. Message M1 is output.

These processes are performed. In addition, the message M1 is the message M1 described with reference to Fig. 6. That is, the message M1 is the following message.

"The content recorded on the disc is all HD (2K) content. In the television in use, you can watch all content without any problems".

A process of outputting the above message to the display device under the control of the information processing apparatus is performed.

When "content information B = 1: information recording medium includes 4K content" is determined in step S104, the process proceeds to step S106.

In step S106, the information processing apparatus determines whether the display device that performs content display is a 4K compatible display device or a 4K non-compatible display device.

This determination process is performed with reference to the 4K display capability information that is acquired from the display device and is stored in the storage unit (register) in step S101. That is, this is the storage information of the PSR described with reference to Figs. 8 and 9, for example.

When it is determined that the display device is a 4K non-compatible display device in step S106, the process proceeds to step S107.

On the other hand, when it is determined that the display device is a 4K compatible display device, the process proceeds to step S108.

When it is determined that the display device is a 4K non-compatible display device in step S106, the process proceeds to step S107 to perform the following process.
a. An initial output to the display device is set to 2K output (HD).
b. Message M2 is output.

This process of step S107 corresponds to the process of (B1) described above with reference to Fig. 5. That is, this is a process corresponding to the following settings.
Content information A = 0 (output at the start of reproduction = 2K)
Content information B = 1 (4K content is included in the information recording medium)
Display device = 4K non-compatible

In the case of these settings, that is, in the case of (B1) shown in Fig. 5, the following process shown in step S107 is performed.
a. An initial output to the display device is set to 2K output (HD).
b. Message M2 is output.

These processes are performed. In addition, the message M2 is the message M2 described with reference to Fig. 6. That is, the message M2 is the following message.

"4K content is included in the content recorded on the disc. The television in use does not support 4K. You cannot watch 4K content. Or the 4K content will be displayed with the reduced image quality".

A process of outputting the above message to the display device under the control of the information processing apparatus is performed.

On the other hand, when it is determined that the display device is a 4K compatible display device in step S106, the process proceeds to step S108 to perform the following process.
a. An initial output to the display device is set to 2K output (HD).
b. Message M3 is output.

This process of step S108 corresponds to the process of (B2) described above with reference to Fig. 5. That is, this is a process corresponding to the following settings.
Content information A = 0 (output at the start of reproduction = 2K)
Content information B = 1 (4K content is included in the information recording medium)
Display device = 4K compatible

In the case of these settings, that is, in the case of (B2) shown in Fig. 5, the following process shown in step S108 is performed.
a. An initial output to the display device is set to 2K output (HD).
b. Message M3 is output.

These processes are performed. In addition, the message M3 is the message M3 described with reference to Fig. 6. That is, the message M3 is the following message.

"4K content is included in the content recorded on the disc. The television in use supports 4K. You can watch all content without any problems".

A process of outputting the above message to the display device under the control of the information processing apparatus is performed.

Next, a process when "content information A = 1: output at the start of reproduction = 4K content" is determined in step S103 and the process proceeds to step S109 will be described.

In step S109, the information processing apparatus determines a setting of the content information B [4K_content_exist_flag] acquired from the information recording medium. That is, the information processing apparatus determines whether the setting of the content information B [4K_content_exist_flag] is "content information B = 0: information recording medium does not include 4K content" or "content information B = 1: information recording medium includes 4K content".

In this determination process, "content information B = 1: information recording medium includes 4K content" is typically determined.

This is because 4K content is necessarily included in the information recording medium in the case of content information A = 1 (initial output = 4K).

Accordingly, the determination in step S109 is typically Yes, and the process proceeds to step S110.

In step S110, the information processing apparatus determines whether the display device that performs content display is a 4K compatible display device or a 4K non-compatible display device.

This determination process is performed with reference to the 4K display capability information that is acquired from the display device and is stored in the storage unit (register) in step S101. That is, this is the storage information of the PSR described with reference to Figs. 8 and 9, for example.

When it is determined that the display device is a 4K non-compatible display device in step S110, the process proceeds to step Sill.

On the other hand, when it is determined that the display device is a 4K compatible display device, the process proceeds to step S112.

When it is determined that the display device is a 4K non-compatible display device in step S110, the process proceeds to step Sill to perform the following process.
a. An initial output to the display device is set to 2K output (HD).
b. Message M2 is output.

This process of step Sill corresponds to the process of (C1) described above with reference to Fig. 5. That is, this is a process corresponding to the following settings.
Content information A = 1 (output at the start of reproduction = 4K)
Content information B = 1 (4K content is included in the information recording medium)
Display device = 4K (4K non-compatible)

In the case of these settings, that is, in the case of (C1) shown in Fig. 5, the following process shown in step Sill is performed.
a. An initial output to the display device is set to 2K output (HD).
b. Message M2 is output.

These processes are performed. In addition, the message M2 is the message M2 described with reference to Fig. 6. That is, the message M2 is the following message.

"4K content is included in the content recorded on the disc. The television in use does not support 4K. You cannot watch 4K content. Or the 4K content will be displayed with the reduced image quality".

A process of outputting the above message to the display device under the control of the information processing apparatus is performed.

In step S111, the output at the start of reproduction is 4K content, but it is necessary to set the initial output to the display device to 2K (HD). Therefore, it is necessary for the information processing apparatus to perform down-conversion processing (4K -> 2K) at the time of output to the display device.

On the other hand, when it is determined that the display device is a 4K compatible display device in step S110, the process proceeds to step S112 to perform the following process.
a. An initial output to the display device is set to 4K.
b. Message M3 is output.

This process of step S112 corresponds to the process of (C2) described above with reference to Fig. 5. That is, this is a process corresponding to the following settings.
Content information A = 0 (output at the start of reproduction = 2K)
Content information B = 1 (4K content is included in the information recording medium)
Display device = 4K compatible

In the case of these settings, that is, in the case of (C2) shown in Fig. 5, the following process shown in step S112 is performed.
a. An initial output to the display device is set to 4K.
b. Message M3 is output.

These processes are performed. In addition, the message M3 is the message M3 described with reference to Fig. 6. That is, the message M3 is the following message. "4K content is included in the content recorded on the disc. The television in use supports 4K. You can watch all content without any problems".

A process of outputting the above message to the display device under the control of the information processing apparatus is performed.

In the sequence described with reference to Fig. 10, explanation has been given on the assumption that a message for a user (viewer) is displayed in all cases corresponding to the six patterns of (A1) to (C2) shown in Fig. 5. However, as described above, a setting for performing message display only in some cases is also possible.

For example, a setting is also possible in which a message (messages M1 and M3) is not displayed when viewing is possible without any problems and only a message (message M2) is displayed when there is a possibility of a problem in the viewing.

Thus, the information processing apparatus of the present disclosure performs the process according to the flow shown in Fig. 10 as initial processing before the start of content reproduction. Through this process, for example, the following effects can be obtained.
(1) A setting of the initial output from information processing apparatus to the display device, that is, a setting regarding whether the initial output is the 4K content output or the 2K content output can be immediately determined with reference to the content information A [Initial output_preference] read from the information recording medium and the 4K display capability information acquired from the display device. Accordingly, it is possible to shorten the waiting time until the start of reproduction from the instruction of reproduction.
(2) It can be immediately determined whether or not the 4K content can be displayed with reference to the content information B [4K_content_exist_flag] read from the information recording medium and the 4K display capability information acquired from the display device. Accordingly, 4K content display capability information can be presented to the user as a message.

### (6. Down-conversion display control processing corresponding to content)

Next, display control processing in units of the content stored on the information recording medium 101 will be described. The information processing apparatus (player) 102 performs, for example, the following display control processing in units of the content.
(a) Display of 4K content on the 4K compatible display device is allowed, and the display of 2K content generated by down-converting the 4K content on the 4K non-compatible display device is allowed.
(b) Only the display of 4K content on the 4K compatible display device is allowed, and display on the 4K non-compatible display device is not allowed. That is, the display of down-converted 2K content is not allowed.

For example, a content producer or a content provider of 4K content stored on the information recording medium may have the intention to allow only the display as 4K content and not to present 2K content with the image quality deteriorated by down-conversion.

In contrast, the content producer or the content provider of 4K content may have the intention to allow not only the display as 4K content but also the display as 2K content generated by down-converting the 4K content.

An embodiment will be described below in which reproduction control in units of content is performed reflecting the intention of the content producer or the content provider.

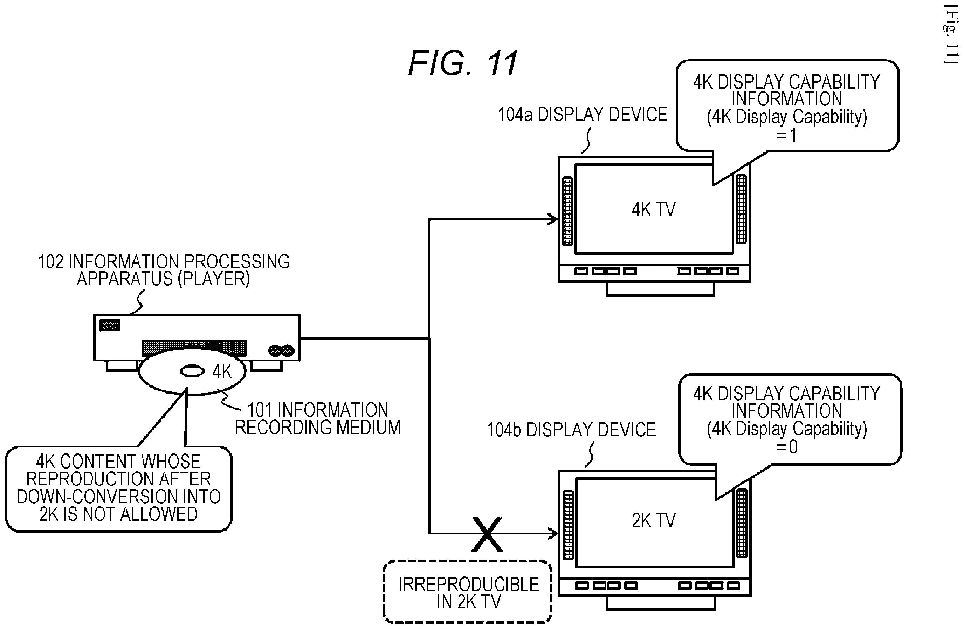

Fig. 11 is a diagram illustrating the reproduction mode of down-conversion non-allowed 4K content, that is, content (4K content) whose down-conversion (conversion for reducing the number of pixels) into 2K content and 2K content display are not allowed.

The information recording medium 101 that stores 4K content is mounted in the information processing apparatus (player) 102, and content reproduction is performed.

The 4K content stored on the information recording medium 101 is down-conversion non-allowed content whose down-conversion (conversion for reducing the number of pixels) into 2K content and 2K content display are not allowed.

Content reproduction control information indicating that down-conversion is not allowed is set in units of content. For example, the content reproduction control information is recorded in the reproduction control program 202 of the data stored on the information recording medium 101 described above with reference to Fig. 3.

For example, according to the title for which reproduction has been instructed from the user, the information processing apparatus 102 selects and executes a reproduction control program corresponding to the title. As a result, the reproduction of the content corresponding to the selected title is performed.

Information indicating whether or not down-conversion reproduction is allowed is recorded in this reproduction control program, and the information processing apparatus 102 performs reproduction according to this information.

The example shown in Fig. 11 is an example of the reproduction of the content whose down-conversion reproduction is not allowed.

When a display device 104a connected to the information processing apparatus (player) 102 is a 4K compatible display device that can display 4K content, 4K content stored on the information recording medium 101 is reproduced and displayed as 4K content as it is.

However, when a display device 104b connected to the information processing apparatus (player) 102 is a 4K non-compatible display device that may not display 4K content, 4K content stored on the information recording medium 101 is not reproduced and displayed.

This is because information indicating down-conversion reproduction is not allowed is recorded in a reproduction control program corresponding to the designated content. The information processing apparatus 102 performs or stops reproduction according to this information.

In the example shown in Fig. 11, 4K content is reproduced only when the display device connected to the information processing apparatus 102 is a 4K compatible display device, and 4K content is not reproduced when the display device connected to the information processing apparatus 102 is a 4K non-compatible display device.

In addition, the information processing apparatus (player) determines whether or not the display device is a 4K compatible display device with reference to, for example, the 4K display capability information stored in the PSR that is a storage unit (register) shown in Figs. 8 and 9, as described above.

In addition, the reproduction control program 202 is set in units of content corresponding to a title, for example, in units of a title. Therefore, it is possible to perform different reproduction control for each content reproduction unit, for example.

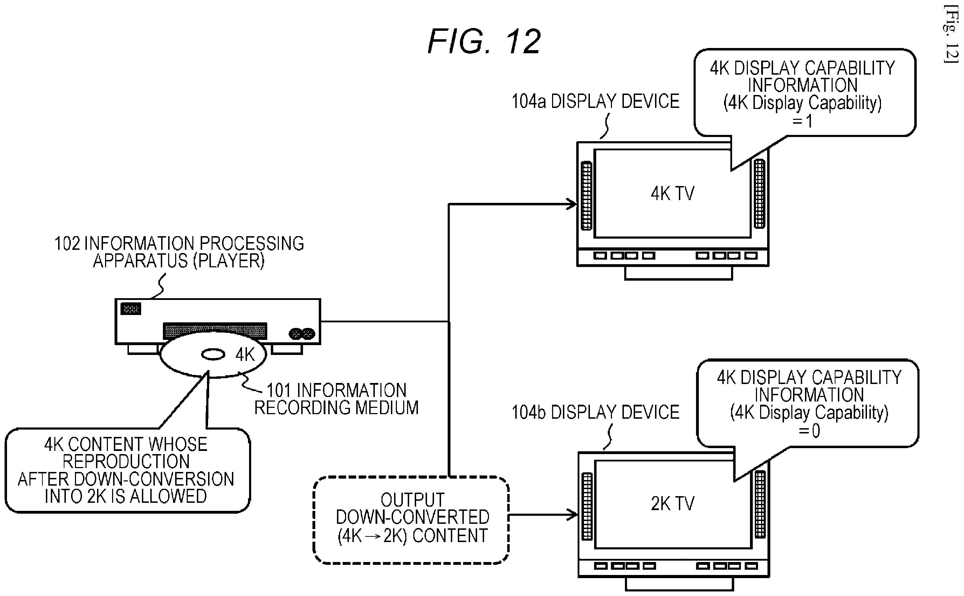

On the other hand, the example shown in Fig. 12 is an example of the reproduction of the content whose down-conversion reproduction is allowed.

When the display device 104a connected to the information processing apparatus (player) 102 is a 4K compatible display device that can display 4K content, 4K content stored on the information recording medium 101 is reproduced and displayed as 4K content as it is.

In addition, when the display device 104b connected to the information processing apparatus (player) 102 is a 4K non-compatible display device that may not display 4K content, 4K content stored on the information recording medium 101 is down-converted into 2K content and is reproduced and displayed as 2K (HD) content.

This is because information indicating down-conversion reproduction is allowed is recorded in the reproduction control program corresponding to the designated content. According to this information, the information processing apparatus 102 reproduces 4K content, or down-converts the 4K content into 2K content and reproduces the 2K content.

In the example shown in Fig. 12, 4K content is reproduced when the display device connected to the information processing apparatus 102 is a 4K compatible display device, and the 4K content is down-converted into 2K content and the 2K content is reproduced when the display device connected to the information processing apparatus 102 is a 4K non-compatible display device.

In addition, it is determined whether or not the display device is a 4K compatible display device with reference to, for example, the 4K display capability information stored in the PSR that is a storage unit (register) shown in Figs. 8 and 9, as described above.

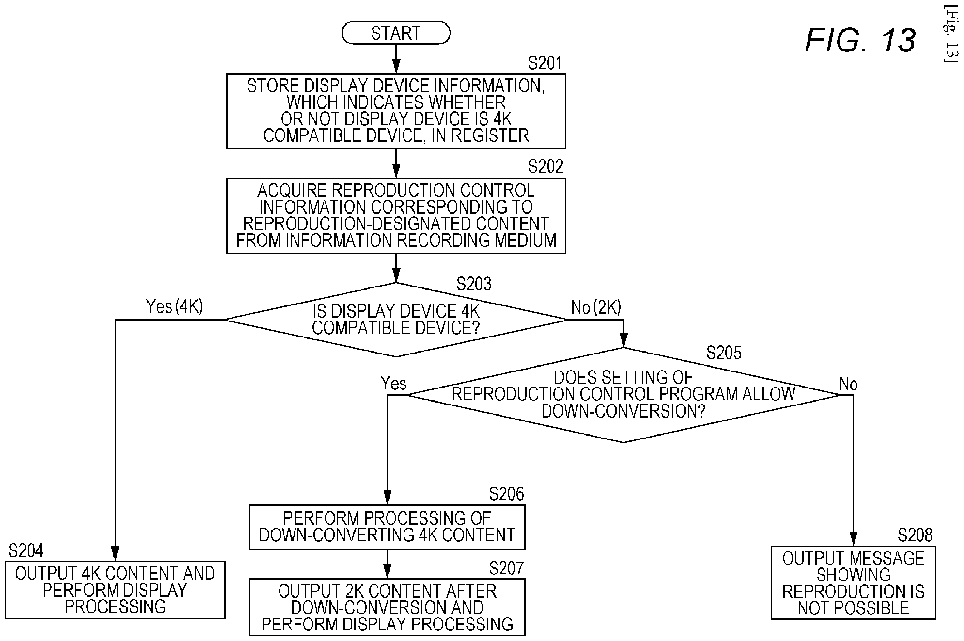

Next, the sequence of a content reproduction control process performed by the information processing apparatus 102 will be described with reference to the flowchart shown in Fig. 13.

The flowchart shown in Fig. 13 is executed by a data processing unit of the information processing apparatus 102 in which the information recording medium 101 that stores content is mounted. A program that records the processing sequence according to the flow shown in Fig. 13 is stored in a memory of the information processing apparatus 102 or on an information recording medium that stores content. According to the program read from the memory or the information recording medium 101, the information processing apparatus 102 performs a process according to the flowchart shown in Fig. 13.

First, in step S201, the information processing apparatus acquires information indicating whether or not the display device, which displays the reproduction content from the information recording medium, is a 4K compatible device that can display 4K content, and stores the acquired information in a storage unit (register).

As described above, for example, HDMI (registered trademark) EDID is acquired from a display device connected through the HDMI (registered trademark) cable, and 4K display capability information included in the acquired information is stored in a storage unit. The storage unit is PSR described with reference to Figs. 8 and 9, for example.

Either bit value: 1 (when the display device is a 4K compatible display device) or bit value: 0 (when the display device is a 4K non-compatible display device) is stored.

In addition, when display device information is not acquired from the display device, it is determined that the display device is a 4K non-compatible display device, and the bit value 0 is stored.

Then, in step S202, the information processing apparatus acquires a reproduction control program corresponding to the reproduction-designated content from the information recording medium.

This reproduction control program is, for example, a reproduction control program set in units of a title, as described above with reference to Fig. 3.

For example, the information processing apparatus selects and reads a reproduction control program corresponding to the title that the user selects, as an object to be reproduced, from a plurality of content titles recorded in the index table.

In the processing sequence according to the flow shown in Fig. 13, the content selected as an object to be reproduced is assumed to be 4K content.

Then, in step S203, the information processing apparatus determines whether the display device that performs content display is a 4K compatible display device, which can display 4K content, or a 4K non-compatible display device.

This determination process is performed with reference to the 4K display capability information that is acquired from the display device and is stored in the storage unit (register) in step S201. That is, this is the storage information of the PSR described with reference to Figs. 8 and 9.

When it is determined that the display device is a 4K compatible display device in step S203, the process proceeds to step S204.

On the other hand, when it is determined that the display device is a 4K non-compatible display device, the process proceeds to step S205.

When it is determined that the display device is a 4K compatible display device in step S203, the process proceeds to step S204 to output the reproduction-designated 4K content to the display device as 4K content and perform reproduction and display processing on the 4K content.

On the other hand, when it is determined that the display device is a 4K non-compatible display device in step S203, the process proceeds to step S205.

In step S205, reproduction control information set in the reproduction control program corresponding to the content to be reproduced is acquired, and it is determined whether or not the setting of the reproduction control information allows down-conversion reproduction.

When the setting of the reproduction control information allows down-conversion reproduction, the process proceeds to step S206.

When the setting of the reproduction control information does not allow down-conversion reproduction, the process proceeds to step S208.

When it is determined that the setting of the reproduction control information allows down-conversion reproduction in step S205, the process proceeds to step S206 to perform down-conversion processing on the 4K content to be reproduced, thereby generating 2K content with the number of pixels reduced from that of the 4K content.

Then, in step S207, a process of outputting the 2K (HD) content generated by the down-conversion processing to the display device and reproducing and displaying the 2K (HD) content is performed.

On the other hand, when it is determined that the setting of the reproduction control information does not allow down-conversion reproduction in step S205, the process proceeds to step S208.

In step S208, the information processing apparatus outputs and displays a message, which shows that the designated content may not be reproduced, on the display device.

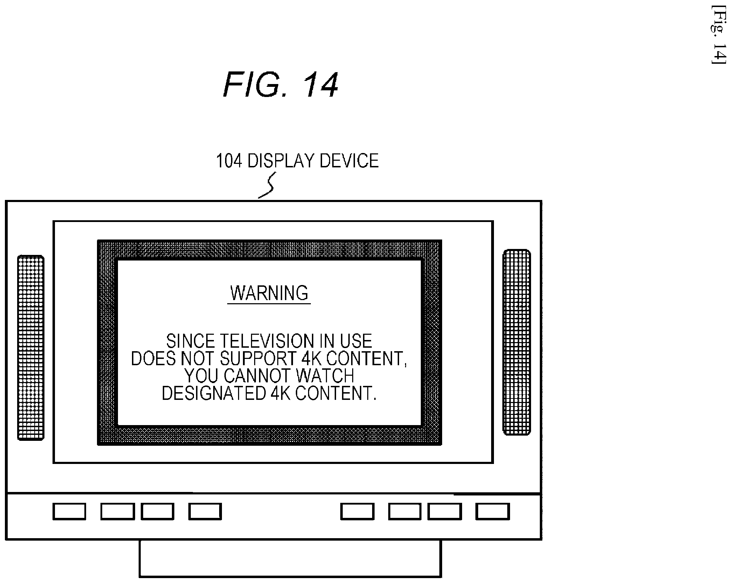

Fig. 14 shows an example of a display message.

As shown in Fig. 14, the message is the following message, for example.

"Since the television in use does not support 4K, you cannot watch the designated 4K content"

Thus, the information processing apparatus of the present disclosure performs the process according to the flow shown in Fig. 13 when reproducing 4K content.

By this process, for 4K content, the following process can be selectively performed in units of content according to the intention of the producer or the provider of the 4K content.
(a) Only the reproduction as 4K content is allowed, and the reproduction and display of down-converted 2K content are not allowed.
(b) Reproduction as 4K content is allowed, and the reproduction and display of down-converted 2K content are also allowed.

Reproduction control in one of these settings of (a) and (b) can be performed in units of content.

### (7. Configuration of an information processing apparatus)

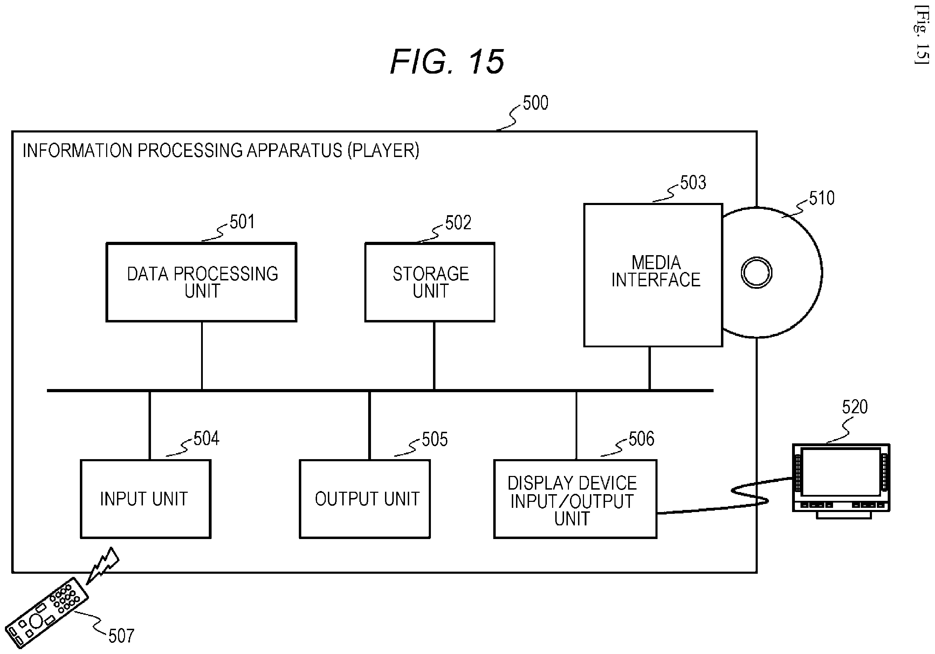

Next, an example of the hardware configuration of an information processing apparatus (player) that performs content reproduction will be described with reference to Fig. 15. Fig. 15 is a block diagram showing an example of the configuration of an information processing apparatus (player) 500. The information processing apparatus (player) 500 shown in Fig. 15 corresponds to the information processing apparatus (player) 102 shown in Fig. 1.

The information processing apparatus 500 is an apparatus that reproduces data from an information recording medium 510. Specifically, the information processing apparatus 500 is an apparatus, such as a recording and reproduction apparatus, a player apparatus, a recorder apparatus, a video camera, or a PC, for example.

In addition, although a disc type medium is shown as the information recording medium 510 in Fig. 15, it is possible to use media, such as a flash memory, without being limited to the disc type medium.

As shown in Fig. 15, the information processing apparatus 500 includes a data processing unit (recording and reproduction control unit) 501, a storage unit 502, a media interface 503, an input unit 504, an output unit 505, and a display device input/ output unit 506.

The data processing unit 501 includes a CPU having a program execution function to execute various data processing programs. For example, an application program to perform data reproduction processing is performed. In addition, for example, the process according to the flowchart described with reference to Fig. 10 or 13 is performed.

The memory 502 is configured to include a RAM, a ROM, and the like, and is used as a storage area of a program or the like executed by the data processing unit 501. In addition, the memory 502 is used as a parameter and work area for program execution, and is also used as a buffer area of media record data.

The register (PSR) described above with reference to Figs. 7 to 9 is also one of the components of the storage unit 502.

The media interface 503 is an interface applied to data reproduction processing using the information recording medium 510. According to the request of the data processing unit 501, a process of reading the data from the information recording medium 510 and the like are performed.

The input unit 504 is, for example, a user operation unit, and various inputs, such as the input of data recording or reproduction instruction, are performed. In addition, operation information from a remote control 507 is also input to the input unit 504.

The output unit 504 is an output unit configured by a display provided in the information processing apparatus or the like.

The display device input/output unit 506 performs data input/output to/from a display device 520, for example, through the HDMI (registered trademark) cable.

This is used in the process of acquiring the display device information indicating whether or not the display device 520 is a 4K compatible display device, in the process of outputting the reproduction content, and the like.

Until now, the embodiment of the present disclosure has been described in detail with reference to the specific embodiment. However, it is apparent to those skilled in the art that various modifications or substitutions of the above embodiment may be made without departing from the scope of the claims. That is, since the present invention has been disclosed in the form of only illustration, the present invention should not be interpreted restrictively. The present invention is limited only by the appended claims.

In addition, the series of processes described in this specification may be performed by hardware, software, or a composite configuration of both hardware and software. When performing the process based on the software, a program that records the processing sequence may be installed into a memory in a computer built in dedicated hardware and be executed, or the program may be installed into a general-purpose computer capable of performing various kinds of processes and be executed. For example, a program may be recorded in advance on a recording medium. Instead of installing a program from the recording medium into the computer, it is also possible to receive a program through a network, such as a LAN (Local Area Network) or the Internet, and install the program in recording media, such as a built-in hard disk.

In addition, the various processes described in the specification may be performed not only in a time-sequential manner described but also in parallel or individually according to the necessity or the processing performance of an apparatus that performs the processes. In addition, the system in this specification is a logical set of a plurality of apparatuses, and the respective apparatuses are not necessarily located within the same housing.

It should be understood by those skilled in the art that various modifications, combinations, sub-combinations and alterations may occur depending on design requirements and other factors insofar as they are within the scope of the appended claims or the equivalents thereof.

### [Industrial Applicability]

As described above, according to the configuration of an embodiment of the present disclosure, there is provided an apparatus and method to perform accurately and efficiently a process for output control of the content recorded on an information recording medium or a process of outputting a display capability message or the like. Specifically, for example, in the record content of the information recording medium, the content information A, which indicates whether an output at the start of reproduction that is first output to a display device is 4K content or 2K content, and the content information B, which indicates whether or not 4K content is included in the record content of the information recording medium, are read from the information recording medium. In addition, 4K display capability information indicating whether or not the display device is a 4K compatible display device is received from the display device and is stored in a register. By applying such content information A and B and the 4K display capability information, the content output control process and the display capability message output process can be performed accurately and efficiently.

### [Reference Signs List]

- 101: Information recording medium
- 102: Information processing apparatus (player)
- 103: Operation unit (remote control)
- 104: Display device
- 105: Connection cable
- 201: Index table
- 202: Reproduction control program
- 203: Playlist
- 204: Clip information
- 205: Clip AV stream
- 301: Content information A
- 302: Content information B
- 401: Storage unit (register)
- 421: 4K display capability information
- 422: 4K display capability information
- 500: Information processing apparatus (player)
- 501: Data processing unit
- 502: Storage unit
- 503: Media interface
- 504: Input unit
- 505: Output unit
- 506: Display device input/output unit
- 507: Remote control
- 510: Information recording medium
- 520: Display device

## Claims

1. An information processing system comprising:
circuitry configured to
control reproduction of content recorded to a Blu-ray disc;
control reading, from the Blu-ray disc , first content information indicating whether an initial output mode at a start of reproduction is 4K or 2K, and second content information indicating whether 4K content is recorded to the Blu-ray disc wherein the first and second content information are contained in an index table and said first content information corresponds to an "initial_4K_output_preference" one bit flag and said second content information corresponds to a "4K_content_exist_flag" one bit flag;
output a notification based on the initial output mode at start of reproduction indicated by the first content information and based on the second content information,
identify whether a display device is 4K compatible; and
wherein the notification is output as a message to be displayed by the display device based on the initial output mode at start of reproduction, the second content information and a result of the identification.

2. The information processing system of claim 1, wherein the circuitry is configured to:
identify the initial output mode as 4K when the first content information indicates an initial output mode of 4K; and
identify the initial output mode as 2K when the first content information indicates an initial output mode of 2K.

3. The information processing system of claim 1, wherein the circuitry is configured to:
acquire 4K compatibility information from the display device indicating whether the display device is 4K compatible;
store the 4K compatibility information; and
identify whether the display device is 4K compatible based on the stored 4K compatibility information.

4. An information processing method executed by an information processing system, the method comprising:
reading first content information recorded to a Blu-ray disc, the first information indicating whether an initial output mode at start of reproduction is 4K or 2K, and control reading second content information indicating whether 4K content is recorded to the Blu-ray disc wherein the first and second content information are contained in an index table and said first content information corresponds to an "initial_4K_output_preference" one bit flag and said second content information corresponds to a "4K_content_exist_flag" one bit flag;
outputting a notification based on the initial output mode indicated by the first content information and based on the second content information,
identifying whether a display device is 4K compatible; and
wherein the notification is output as a message to be displayed by the display device based on the initial output mode at start of reproduction, the second content information and a result of the identification.

5. A non-transitory computer-readable medium including computer-program instructions, which when executed by the information processing system of claim 1, cause the information processing system of claim 1 to carry out the steps of the method according to claim 4.

## Patentansprüche

1. Datenverarbeitungssystem, das Folgendes umfasst:
eine Schaltungsanordnung, die konfiguriert ist zum
Steuern der Wiedergabe von Inhalten, die auf einen Blu-Ray-Datenträger aufgezeichnet wurden;
Steuern des Lesens vom Blu-Ray Datenträger erster Inhaltsinformationen, die anzeigen, ob ein anfänglicher Ausgabemodus bei einem Start der Wiedergabe 4K oder 2K ist, und zweiter Inhaltsinformationen, die anzeigen, ob 4K-Inhalte auf dem Blu-Ray-Datenträger aufgezeichnet ist, wobei die ersten und die zweiten Inhaltsinformationen in einer Indextabelle enthalten sind und die ersten Inhaltsinformationen einem "initial_4K_output_preference"-Einzelbitmerker entsprechen und die zweiten Inhaltsinformationen einem "4K_content_exist_flag"-Einzelbitmerker entsprechen;
Ausgeben einer Benachrichtigung auf der Grundlage des anfänglichen Ausgabemodus beim Start der Wiedergabe, der durch die ersten Inhaltsinformationen und auf der Grundlage der zweiten Inhaltsinformationen angezeigt wird; und
Identifizieren, ob eine Anzeigevorrichtung 4K-kompatibel ist, wobei
die Benachrichtigung als eine Nachricht, die durch die Anzeigevorrichtung auf der Grundlage des anfänglichen Ausgabemodus beim Start der Wiedergabe, der zweiten Inhaltsinformationen und eines Ergebnisses der Identifizierung angezeigt werden soll, ausgegeben wird.

2. Datenverarbeitungssystem nach Anspruch 1, wobei die Schaltungsanordnung konfiguriert ist zum
Identifizieren des anfänglichen Ausgabemodus als 4K, wenn die ersten Inhaltsinformationen einen anfänglichen Ausgabemodus von 4K anzeigen; und
Identifizieren des anfänglichen Ausgabemodus als 2K, wenn die ersten Inhaltsinformationen einen anfänglichen Ausgabemodus von 2K anzeigen.

3. Datenverarbeitungssystem nach Anspruch 1, wobei die Schaltungsanordnung konfiguriert ist zum
Erfassen von 4K-Kompatibilitätsinformationen von der Anzeigevorrichtung, die anzeigen, ob die Anzeigeeinrichtung 4K-kompatibel ist;
Speichern der 4K-Kompatibilitätsinformationen und
Identifizieren, ob die Anzeigevorrichtung 4K-kompatibel ist, auf der Grundlage der gespeicherten 4K-Kompatibilitästinformationen.

4. Datenverarbeitungsverfahren, das durch ein Datenverarbeitungssystem ausgeführt wird, wobei das Verfahren Folgendes umfasst:
Lesen erster Inhaltsinformationen, die auf einen Blu-Ray-Datenträger aufgezeichnet wurden, wobei die ersten Informationen anzeigen, ob ein anfänglicher Ausgabemodus bei einem Start der Wiedergabe 4K oder 2K ist, und Steuern des Lesens zweiter Inhaltsinformationen, die anzeigen, ob 4K-Inhalte auf dem Blu-Ray-Datenträger aufgezeichnet ist, wobei die ersten und die zweiten Inhaltsinformationen in einer Indextabelle enthalten sind und die ersten Inhaltsinformationen einem "initial_4K_output_preference"-Einzelbitmerker entsprechen und die zweiten Inhaltsinformationen einem "4K_content_exist_flag"-Einzelbitmerker entsprechen;
Ausgeben einer Benachrichtigung auf der Grundlage des anfänglichen Ausgabemodus, der durch die ersten Inhaltsinformationen und auf der Grundlage der zweiten Inhaltsinformationen angezeigt wird; und
Identifizieren, ob eine Anzeigevorrichtung 4K-kompatibel ist, wobei
die Benachrichtigung als eine Nachricht, die durch die Anzeigevorrichtung auf der Grundlage des anfänglichen Ausgabemodus beim Start der Wiedergabe, der zweiten Inhaltsinformationen und eines Ergebnisses der Identifizierung angezeigt werden soll, ausgegeben wird.

5. Nichttransitorisches computerlesbares Medium, das Computerprogrammanweisungen enthält, die, wenn sie durch das Datenverarbeitungssystem nach Anspruch 1 ausgeführt werden, bewirken, dass das Datenverarbeitungssystem nach Anspruch 1 die Schritte des Verfahrens nach Anspruch 4 ausführt.

## Revendications

1. Système de traitement d'informations, comprenant :
un montage de circuits configuré pour
commander la reproduction d'un contenu enregistré sur un disque Blu-ray ;
commander la lecture, à partir du disque Blu-ray, de premières informations de contenu indiquant si un mode de sortie initial en début de reproduction est 4K ou 2K et de deuxièmes informations de contenu indiquant si un contenu 4K est enregistré sur le disque Blu-ray, les premières et deuxièmes informations de contenu étant contenues dans une table d'index et lesdites premières informations de contenu correspondant à un drapeau sur un bit "initial_4K_output_preference" et lesdites deuxièmes informations de contenu correspondant à un drapeau sur un bit "4K_content_exist_flag" ;
délivrer une notification sur la base du mode de sortie initial en début de reproduction indiqué par les premières informations de contenu et sur la base des deuxièmes informations de contenu ;
identifier si un dispositif d'affichage est compatible 4K ; et
la notification étant délivrée sous forme d'un message destiné à être affiché par le dispositif d'affichage sur la base du mode de sortie initial en début de reproduction, des deuxièmes informations de contenu et d'un résultat de l'identification.

2. Système de traitement d'informations selon la revendication 1, dans lequel le montage de circuits est configuré pour :
identifier le mode de sortie initial comme 4K lorsque les premières informations de contenu indiquent un mode de sortie initial de 4K ; et
identifier le mode de sortie initial comme 2K lorsque les premières informations de contenu indiquent un mode de sortie initial de 2K.

3. Système de traitement d'informations selon la revendication 1, dans lequel le montage de circuits est configuré pour :
acquérir, auprès du dispositif d'affichage, des informations de compatibilité 4K indiquant si le dispositif d'affichage est compatible 4K ; et
mémoriser les informations de compatibilité 4K ; et
identifier si le dispositif d'affichage est compatible 4K sur la base des informations de comptabilité 4K mémorisées.

4. Procédé de traitement d'informations exécuté par un système de traitement d'informations, le procédé comprenant :
la lecture de premières informations de contenu enregistrées sur un disque Blu-ray, les premières informations indiquant si un mode de sortie initial en début de reproduction est 4K ou 2K, et la commande de la lecture de deuxièmes informations de contenu indiquant si un contenu 4K est enregistré sur le disque Blu-ray, les premières et deuxièmes informations de contenu étant contenues dans une table d'index et lesdites premières informations de contenu correspondant à un drapeau sur un bit "initial_4K_output_preference" et lesdites deuxièmes informations de contenu correspondant à un drapeau sur un bit "4K_content_exist_flag" ;
la délivrance d'une notification sur la base du mode de sortie initial indiqué par les premières informations de contenu et sur la base des deuxièmes informations de contenu ;
l'identification si un dispositif d'affichage est compatible 4K ; et
la notification étant délivrée sous forme d'un message destiné à être affiché par le dispositif d'affichage sur la base du mode de sortie initial en début de reproduction, des deuxièmes informations de contenu et d'un résultat de l'identification.

5. Support non transitoire lisible par ordinateur comportant des instructions de programme d'ordinateur qui, une fois exécutées par le système de traitement d'informations selon la revendication 1, amènent le système de traitement d'informations selon la revendication 1 à accomplir les étapes du procédé selon la revendication 4.
